# EUROPÄISCHE PATENTSCHRIFT

(11) **EP 2 631 668 B1**
(45) Veröffentlichungstag und Bekanntmachung des Hinweises auf die Patenterteilung: **25.05.2016**
(21) Anmeldenummer: 12001225.7
(22) Anmeldetag: 24.02.2012
(51) Int. Cl.: G01S 7/497, G01S 17/02, G01S 17/06

(54) **Optische Einrichtung und Prüfverfahren zur Prüfung der Funktionsfähigkeit einer optischen Einrichtung**
Optical system and test procedure for testing the functionality of an optical system
Système optique et procédé de contrôle de la capacité de fonctionnement d'un système optique

(43) Veröffentlichungstag der Anmeldung: 28.08.2013
(73) Patentinhaber: Sick AG, 79183 Waldkirch/Breisgau (DE)
(72) Erfinder: Wüstefeld, Martin, 79350 Sexau (DE); Bauer, Robert, Dr., 79312 Emmendingen (DE)
(74) Vertreter: Manitz, Finsterwald & Partner GbR

(56) Entgegenhaltungen:
- EP-B1- 0 951 697
- WO-A2-2008/113783
- GB-A- 1 152 567
- US-A1- 2003 075 675
- US-A1- 2012 032 800

## Beschreibung

Die Erfindung betrifft ein Prüfverfahren zur Prüfung der Funktionsfähigkeit eines optischen Sensors zur Überwachung eines Überwachungsbereiches, bei dem wenigstens ein Testobjekt eingesetzt wird, das sich in einem den Überwachungsbereich enthaltenden Erfassungsbereich des Sensors befindet. Die Erfindung betrifft weiterhin eine Sensoreinrichtung mit einem optischen Sensor zur Überwachung eines Überwachungsbereiches mit einer Erfassungseinrichtung zur Beobachtung eines den Überwachungsbereich umfassenden Erfassungsbereiches und wenigstens einem Testobjekt innerhalb des Erfassungsbereiches.

Vorrichtungen zur Objektdetektion bzw. Objektlokalisierung umfassen z.B. Lichtscannersysteme, wobei häufig Laserscanner zum Einsatz kommen. Dabei wird ein von einem Laser erzeugter Lichtstrahl über eine Lichtablenkeinheit des Scannersystems in einen Schutzbereich gelenkt und dort von einem gegebenenfalls vorhandenen Objekt reflektiert oder remittiert. Das reflektierte bzw. remittierte Licht gelangt wieder zurück zu dem Scannersystem und wird dort von einem Empfänger detektiert. Die Lichtablenkeinheit ist oftmals schwenkbar bzw. drehbar ausgestaltet, so dass der von dem Laser erzeugte Lichtstrahl einen durch die Schwenkbewegung erzeugten Erfassungsbereich überstreicht. Wird ein vom Empfänger empfangenes reflektiertes Lichtsignal aus dem Überwachungsbereich empfangen, so kann aus der Winkelstellung der Ablenkeinheit auf die Winkellage des Objekts im Schutzbereich geschlossen werden.

Wird zusätzlich z.B. die Laufzeit von z.B. pulsförmigem Laserlicht überwacht, kann aus der Laufzeit unter Verwendung der Lichtgeschwindigkeit auch auf die Entfernung des Objekts vom Laserscanner geschlossen werden. Auf diese Weise lassen sich z.B. zweidimensionale Schutzfelder vollständig überwachen. Ablenkung in einer weiteren Raumrichtung oder Verwendung mehrerer derartiger Scanner mit fächerförmig angeordneten Schutzfeldern erlauben auch die Überwachung eines dreidimensionalen Raumes.

Derartige Systeme werden z.B. bei fahrerlosen Transportsystemen eingesetzt, um Kollisionen zu vermeiden. Andere Anwendungen betreffen z.B. Maschinen, bei denen ein Gefahrenbereich überwacht werden muss, der beim Betrieb der Maschine von einer Bedienperson nicht verletzt werden darf. Es kann sich dabei z.B. um einen Roboterarbeitsbereich handeln. Wird mit Hilfe des Laserscanners die Anwesenheit eines unzulässigen Objekts - also z.B. ein Bein einer Bedienperson - im Gefahrenbereich festgestellt, wird ein Nothalt der Maschine bewirkt.

Solche Scannersysteme sind z.B. in DE 39 08 273 C1 oder EP 1 980 871 B1 beschrieben.

Optische Sensoren können andererseits auch abstandsmessende Sensoren sein, die z.B. aus der Lichtdauer, die ein in einen Überwachungsbereich eingestrahltes Lichtsignal nach Reflexion an einem Objekt in dem Überwachungsbereich wieder zurück zum Sensor benötigt, auf die Entfernung schließen.

Die oben beschriebenen Systeme weisen oftmals Fotodioden oder Fotodiodenarrays als Empfänger auf. Es sind jedoch auch kamerabasierte Empfänger bekannt.

Zur Überprüfung der Funktionsfähigkeit, insbesondere der zuverlässigen Objektdetektion und Objektlokalisierung durch ein Sicherheitssystem ist eine Kontrolle der wichtigsten Leistungsfunktionen notwendig.

EP 2 394 882 A1 beschreibt einen Radarscanner, zum Beispiel zur Überwachung eines Schienenweges, wobei ein Objekt, hier zum Beispiel eine Schranke, in einen Beobachtungsbereich eingebracht wird und das daraufhin gescannte Bild mit einem zuvor ohne das Objekt gescannten Bild verglichen wird. Auf diese Weise wird geprüft, ob der Scanner das eingebrachte Objekt korrekt detektiert, so dass eine Aussage über seine Funktionsfähigkeit möglich ist.

In der US 2003/075675 A1 ist ein optischer Sensor mit einer Empfangsvorrichtung beschrieben, deren Empfangselemente mittels zweier Sendevorrichtungen auf ihre Funktionsfähigkeit getestet werden, die verschiedene, komplementäre Lichtmuster aussenden. Durch die komplementären Lichtmuster wird sichergestellt, dass möglichst alle Empfangselemente der Empfangsvorrichtung nach einer entsprechenden Reflexion oder Remission des Lichtes beaufschlagt werden. Der Funktionstest kann bei objektfreiem Überwachungsbereich oder während der normalen Überwachung des Überwachungsbereichs erfolgen.

In der WO 2008/113783 A2 ist ein Verfahren zur Kompensation von Fehlern in einer bestimmten Anzahl von Freiheitsgraden in der geometrischen Beziehung zwischen einem Werkstück und einer dieses aufnehmenden Halterung, die beispielsweise über einen Roboterarm bewegt wird, beschrieben. Dabei wird ein Referenzobjekt vom gleichen Typ wie das zu bearbeitende Werkstück verwendet, das zumindest drei Referenzflächen aufweist, deren Position und Orientierung bei verschiedenen Stellungen des Referenzobjektes mittels eines optischen Sensors gemessen werden. Daraufhin werden die Positions- und Orientierungsänderungen sämtlicher Referenzflächen sowie eine Beziehung zwischen diesen und entsprechenden Änderungen der Position und Orientierung des Werkstücks berechnet. Die berechnete Beziehung wird dann zur Kompensation der Fehler bei der Werkstücksposition und -orientierung herangezogen.

In der GB 1 152 567 A ist ein Laseroszillator zur Bestimmung der optischen Verluste durch ein Testobjekt beschrieben. Dabei kann das Testobjekt mittels eines bewegten Trägers in den Pfad des internen Lichtstrahls des Lasergenerators eingebracht und wieder aus diesem herausbewegt werden. Bei dem Testobjekt handelt es sich also um eine Probe, für die die optischen Verluste bestimmt werden sollen, die beim Lichtdurchtritt durch die Probe auftreten.

Vorteilhaft ist es, wenn die Sicherheit permanent durch eine geeignete Testung gewährleistet werden kann.

Ein Prüfverfahren mit den Merkmalen des Oberbegriffs des Anspruchs 1 bzw. ein optischer Sensor mit den Merkmalen des Oberbegriffs des Anspruchs 9 ist in DE 39 08 273 C1 beschrieben.

Aufgabe der vorliegenden Erfindung ist die weitere Verbesserung und Erhöhung der Sicherheit eines Prüfverfahrens zur Prüfung der Funktionsfähigkeit eines optischen Sensors und eine entsprechend ausgestaltete optische Sensoreinrichtung anzugeben. Diese Aufgabe wird mit einem Prüfverfahren mit den Merkmalen des Anspruchs 1 bzw. einer optischen Sensoreinrichtung mit den Merkmalen des Anspruchs 8 gelöst. Unteransprüche sind auf bevorzugte Ausführungsformen und Ausgestaltungen gerichtet.

Erfindungsgemäß kommt wenigstens ein Testobjekt zum Einsatz, das sich in einem den Überwachungsbereich des Sensors enthaltenden Erfassungsbereich des Sensors befindet. Der Überwachungsbereich ist dabei derjenige Bereich, der mit dem Sensor überwacht werden soll. Der Erfassungsbereich des Sensors ist dabei derjenige Bereich, der von dem Sensor tatsächlich erfasst werden kann. Insofern befindet sich das Testobjekt bei dem erfindungsgemäßen Prüfverfahren immer im Erfassungsbereich des Sensors, so dass es von diesem gesehen werden kann.

Erfindungsgemäß ist vorgesehen, dass das Testobjekt während der Durchführung des Prüfverfahrens hinsichtlich seiner Lage in dem Erfassungsbereich, seiner Ausrichtung oder seiner optischen Eigenschaften verändert wird. Diese Änderung wird bei dem erfindungsgemäßen Prüfungsverfahren überwacht. Dazu wird entweder nach der Änderung ein Vergleich mit einer vorherigen Beobachtung vorgenommen, die z.B. in einem vorherigen Testlauf gemacht und abgespeichert wurde. Dieser Test kann zum Beispiel periodisch wiederholt werden und gewährleistet dann eine dauerhafte Funktionsüberprüfung. Bei einer alternativen Ausgestaltung wird das Testobjekt während der Änderung beobachtet und aus dem Verlauf der beobachteten Änderung auf die Funktionsfähigkeit des Sensors geschlossen.

Das erfindungsgemäße Verfahren zeichnet sich also dadurch aus, dass ein dynamisches Testobjekt zum Einsatz kommt und nicht nur die Präsenz oder Messbarkeit des Testobjekts überwacht wird, sondern auch dessen Änderung.

Aus der Beobachtung der Änderung des Testobjekts kann dementsprechend auf die Funktionsfähigkeit des Sensors geschlossen werden. Entspricht die Beobachtung nicht dem erwarteten Ergebnis, so kann ein Prüfsignal abgegeben werden, zum Beispiel ein Alarmsignal an einen Benutzer oder ein Stoppsignal für eine Maschine oder ein Fahrzeug.

Grundsätzlich ist es möglich, dass der Erfassungsbereich und der Überwachungsbereich des Sensors nicht übereinstimmen. So kann es z.B. bei fahrerlosen Transportsystemen vorgesehen sein, dass das dynamische Testobjekt zusammen mit dem Fahrzeug bewegt wird und sich zur Prüfung der Funktionsfähigkeit des Sensors in dessen Erfassungsbereich befindet. Der Überwachungsbereich des Sensors hingegen umfasst z.B. den Raum vor dem Fahrzeug. Der Scanner erfasst dann einen das Testobjekt auf dem Fahrzeug und den Raum (den Überwachungsbereich) vor dem Fahrzeug umfassenden Erfassungsbereich. Bei anderen Anwendungen, z.B. bei stationären Maschinen mit einem abzusichernden Gefahrenbereich, kann es andererseits vorteilhaft sein, wenn sich das Testobjekt im Überwachungsbereich befindet.

Das erfindungsgemäße Prüfverfahren kann bei verschiedenen Sensorsystemen zum Einsatz kommen, z.B. bei Entfernungsmessern, zweidimensionalen oder dreidimensionalen Scannern, kamerabasierten Sensoren oder lichtlaufzeitbasierten Sensoren.

Zur Durchführung des Prüfverfahrens kann der Beobachtungsschritt des erfindungsgemäßen Verfahrens z.B. das Detektieren einer optischen Eigenschaft des Testobjekts umfassen. So kann z.B. bei einer bevorzugten Weiterbildung ein Lichtsignal in den Überwachungsbereich gesendet werden und das von dem Testobjekt reflektierte oder remittierte Lichtsignal ausgewertet werden. Wird z.B. in noch zu beschreibender Weise das beobachtbare Reflexionsmuster des Testobjekts geändert, so kann die detektierte Änderung ausgewertet werden, um zu erkennen, ob sie der erwarteten Änderung entspricht und insofern das Testobjekt korrekt detektiert worden ist.

Eine Möglichkeit zur Veränderung des Testobjekts ist es, das Testobjekt innerhalb des Erfassungsbereiches zu bewegen, z.B. zu verschieben. Auswertung der beobachteten Positionsveränderung ergibt Information darüber, ob diese der tatsächlich vorgenommenen Positionsveränderung entspricht, um so Information über die Funktionsfähigkeit des Sensors zu erhalten. Ein solches Prüfverfahren erlaubt zusätzlich auch noch die Feststellung, ob der Sensor eine Verschiebung eines Objekts korrekt misst, so dass mit einem solchen Prüfverfahren nicht nur der Nachweis eines Objekts sichergestellt wird, sondern auch die Fähigkeit des Sensors, eine Positionsänderung korrekt feststellen zu können.

Eine andere Ausgestaltung sieht vor, dass ein Testobjekt, das nicht von allen Seiten gleich ist, während der Durchführung des Prüfverfahrens gedreht wird. Durch die Drehung entsteht ein zeitliches Muster der Reflektivität. Auswertung dieses zeitlichen Verlaufs und Vergleich mit einem erwarteten Verlauf gibt wiederum verlässliche Information über die Funktionsfähigkeit des Sensors.

Eine vorteilhafte Weiterbildung dieser Ausführungsform sieht vor, dass das Testobjekt kontinuierlich gedreht wird und insofern eine periodische Änderung der optischen Eigenschaften, z.B. der Reflektivität, beobachtet und ausgewertet werden kann.

Das Testobjekt ist bei einer anderen Ausgestaltung dahingehend aktiv, dass es eine Lichtquelle aufweist, die ein- oder ausgeschaltet wird, um das Testobjekt zu verändern. Auch eine solche Änderung kann z.B. periodisch erfolgen und das von dem Sensor an der Stelle des Testobjekts gemessene periodische Signal mit dem erwarteten Signal verglichen werden, um die Funktionsfähigkeit des Sensors sicher feststellen zu können.

Die Erfindung sieht vor, dass das wenigstens eine Testobjekt eine Blende aufweist, mit der z.B. eine Lichtquelle derart abgeschattet werden kann, dass sie den Empfänger des Sensors nicht mehr beleuchtet. Eine einfache Ausgestaltung sieht z.B. die Verwendung eines Flüssigkristallshutters (LCD-Shutter) als Blende vor. Öffnen und Schließen der Blende und Beobachtung des Testobjekts mit dem optischen Sensor gestattet auf zuverlässige Weise die Feststellung, ob der Sensor korrekt funktioniert.

Eine erfindungsgemäße Sensoreinrichtung mit einem optischen Sensor zur Überwachung eines Überwachungsbereiches weist eine Erfassungseinrichtung zur Beobachtung eines Erfassungsbereiches auf, der einen Überwachungsbereich des Sensors umfasst. Innerhalb des Erfassungsbereiches ist wenigstens ein Testobjekt vorgesehen.

Erfindungsgemäß umfasst die Sensoreinrichtung eine Veränderungseinrichtung zur Veränderung der Position des wenigstens einen Testobjekts im Erfassungsbereich, der Ausrichtung oder der optischen Eigenschaften des wenigstens einen Testobjekts. Eine Auswerteeinrichtung ist vorgesehen, mit deren Hilfe ein Signal der Erfassungseinrichtung ausgewertet werden kann und ein Prüfsignal in Abhängigkeit der beobachtbaren Veränderung des Testobjekts erzeugt werden kann. Ein erfindungsgemäßer optischer Sensor ermöglicht also die Durchführung des erfindungsgemäßen optischen Prüfverfahrens, indem mit Hilfe der Erfassungseinrichtung das Testobjekt während dessen Änderung beobachtet wird und das beobachtete Signal mit dem erwarteten Signal verglichen wird. Nichtübereinstimmung des beobachteten und des erwarteten Signals führt zur Erzeugung eines Prüfsignals, wie oben bereits beschrieben.

Bei dem optischen Sensor kann es sich z.B. um eine zweidimensionalen oder dreidimensionalen Scanner oder einen Entfernungsmesser handeln, der nach dem Lichtlaufzeitprinzip arbeitet.

Die Vorteile der erfindungsgemäßen Sensoreinrichtung ergeben sich aus den oben bereits für das damit durchführbare Prüfverfahren geschilderten Vorteile.

Besondere Ausführungsformen der erfindungsgemäßen Sensoreinrichtung ergeben sich aus der obigen Schilderung der besonders bevorzugten Ausgestaltungen des erfindungsgemäßen Prüfverfahrens. Insbesondere kann die erfindungsgemäße Sensoreinrichtung gemäß bevorzugter Ausführungsformen eine Einrichtung zum Bewegen des wenigstens eines Testobjekts, z.B. zu dessen Verschiebung innerhalb des Erfassungsbereiches oder dessen Drehung aufweisen.

Andere Ausführungsformen sehen vor, dass das Testobjekt eine Lichtquelle umfasst, die durch eine entsprechende Veränderungseinrichtung ein- oder ausgeschaltet werden kann. Eine andere Ausgestaltung sieht vor, dass das Testobjekt eine Blende umfasst und die Veränderungseinrichtung des erfindungsgemäßen optischen Sensors ausgestaltet ist, um die Blende zu öffnen oder zu schließen.

Sowohl bei dem erfindungsgemäßen Prüfverfahren als auch bei der erfindungsgemäßen Sensoreinrichtung ist es möglich, die beschriebenen Ausführungsformen und Ausgestaltungen mit (i) verschieblichem und/oder (ii) drehbarem Testobjekt, das (iii) zusätzlich als Lichtquelle ausgestaltet ist und/oder (iv) abblendbar ist, und/oder (v) auf andere Weise veränderlichem Testobjekt in vorteilhafter Weise zu kombinieren. Es können auch mehrere gleichartige Testobjekte oder gemäß unterschiedlichen Ausgestaltungen arbeitende Testobjekte zum Einsatz kommen.

Die Erfindung wird anhand der beiliegenden schematischen Figuren im Detail erläutert, die verschiedene Ausführungsformen zeigen. Die Figuren sind dabei nicht maßstabsgetreu zu verstehen. Es zeigen
- Fig. 1: eine erfindungsgemäße Ausführungsform einer optischen Sensoreinrichtung mit einem verschiebbaren Testobjekt,
- Fig. 2: eine erfindungsgemäße Ausführungsform einer optischen Sensoreinrichtung mit einem drehbaren Testobjekt,
- Fig. 3: eine erfindungsgemäße Ausführungsform einer optischen Sensoreinrichtung mit einem Testobjekt, das eine Lichtquelle umfasst,
- Fig. 4: eine erfindungsgemäße Ausführungsform einer optischen Sensoreinrichtung, die eine Blende umfasst, und
- Fig. 5: eine abgewandelte erfindungsgemäße Ausführungsform einer optischen Sensoreinrichtung mit einem Testobjekt mit einer Blende.

Die in den Figuren gezeigten Ausgestaltungen betreffen jeweils Sensoreinrichtungen mit einem Scannersystem zur Überwachung eines Schutzbereiches z.B. auf nicht zulässige Objekte. Es kann sich dabei z.B. um eine Sensoreinrichtung mit einem Scannersystem handeln, das den Gefahrenbereich einer Maschine, z.B. einer Gesenkbiegepresse überwacht. Befindet sich in dem Gefahrenbereich der Maschine ein unzulässiges Objekt, z.B. Gliedmaßen einer Bedienungsperson, so muss dies von der optischen Sensoreinrichtung erfasst werden und ein entsprechendes Signal an eine Bedienperson oder ein Stoppsignal an die Maschine gegeben werden.

Die Figuren zeigen jeweils eine solche Sensoreinrichtung mit einemScannersystem 10, das ein Lichtsignal 14 in einen Erfassungsbereich 12 aussendet. Zur Durchführung der Scannerfunktion wird der Lichtstrahl 14 in an sich bekannter Weise in Richtung des Pfeils 16 periodisch abgelenkt. Das Signal des Scannersystems 10 wird mit Hilfe einer Auswerteeinheit 18 ausgewertet.

Zur Überprüfung der Funktionsfähigkeit des Scannersystems 10 wird erfindungsgemäß ein oder mehrere Testobjekte eingesetzt, das mit dem Scannersystem 10 beobachtet werden kann.

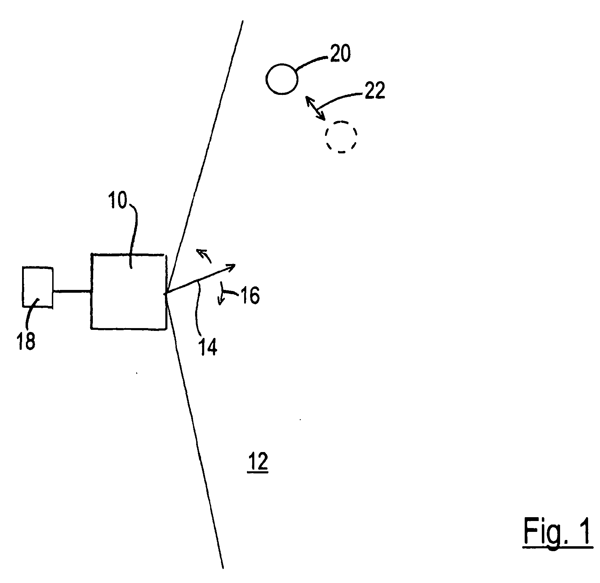

So zeigt Fig. 1 ein Testobjekt 20, das in Richtung 22 verschoben werden kann. Die Bewegung des Testobjekts 20 in Richtung 22 bedeutet eine Dynamisierung des Testobjekts 20. Das Signal des Scannersystems 10 kann daraufhin untersucht werden, ob die detektierte Bewegung des Testobjekts 20 der tatsächlich durchgeführten Bewegung entspricht, die sich z.B. durch eine entsprechende Verschiebungseinrichtung bewirkt wird und bekannt ist.

Ein solches System erlaubt zum einen die Überprüfung der Funktionsfähigkeit des optischen Sensors. Entspricht das gemessene Signal nicht der eingestellten Bewegung des Testobjekts 20, so wird z.B. ein Stoppsignal an eine Maschine gegeben, die mit dem System überwacht wird. Außerdem ermöglicht eine solche Ausführungsform noch Aussagen darüber, ob und wie genau eine Positionsänderung eines Objekts in dem Erfassungsbereich 12 nachgewiesen werden kann.

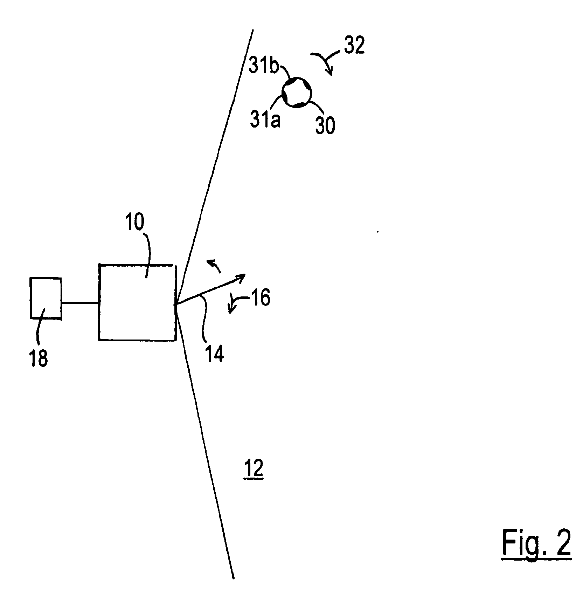

Fig. 2 zeigt eine andere Ausführungsform, bei der das Testziel 30 dunkle und helle Bereiche 31 a bzw. 31b aufweist. Das Testobjekt hat also Bereiche unterschiedlicher Reflektivität. Wird das Testobjekt in Richtung des Pfeiles 32 gedreht, entsteht auf diese Weise ein periodisch wechselndes Reflektivitätsmuster. Dies kann mit dem Scannersystem 10 nachgewiesen werden und so die korrekte Funktionsfähigkeit geprüft werden.

Entspricht das gemessene periodische Signal z.B. nicht der Drehgeschwindigkeit oder ist es überhaupt nicht nachzuweisen, liegt offensichtlich eine Fehlfunktion des Scanners vor.

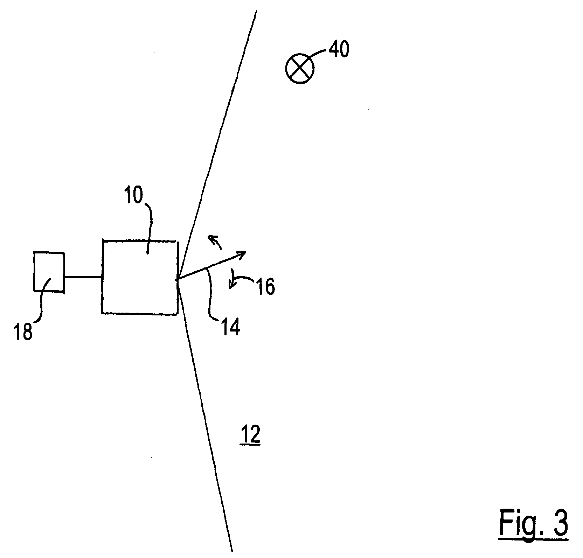

Fig. 3 zeigt eine andere Ausführungsform, bei der das Testobjekt 40 eine Beleuchtungsquelle umfasst. Die Beleuchtungsquelle 40 kann ein- und ausgeschaltet werden und der Ein- und Ausschaltvorgang mit dem Scannersystem 10 überwacht werden. Entspricht das beobachtete Signal nicht dem erwarteten Signal, liegt offensichtlich wiederum eine Fehlfunktion des Sensors vor. Auch hier ist es möglich, eine periodische Ein- und Ausschaltung vorzunehmen, so dass das Scannersystem 10 z.B. die Frequenz überwachen kann.

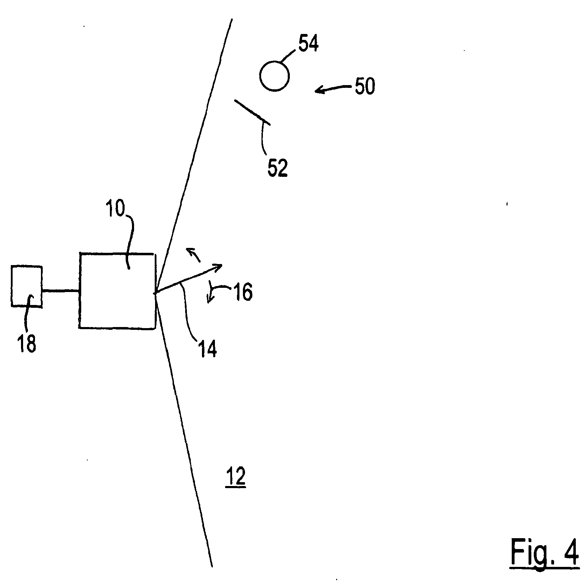

Fig. 4 beschreibt eine Ausführungsform, bei der das Testobjekt 50 einen Gegenstand 54 aufweist, der hinter einer Blende 52 angeordnet ist. Bei dem Gegenstand 54 kann es sich z.B. wiederum um eine Beleuchtungsquelle handeln. Öffnen und Schließen der Blende 52 ändert also das von dem Scannersystem 10 erfassbare Signal.

Bei einer anderen Ausgestaltung umfasst das Objekt 54 z.B. einen spiegelnden Körper, der von einer Blende 52 abgedeckt werden kann, die nicht spiegelnd ausgestaltet ist. Hier ändert sich durch Öffnen und Schließen der Blende 52 das von dem Scanner 10 messbare Reflexionssignal des Testobjekts 50.

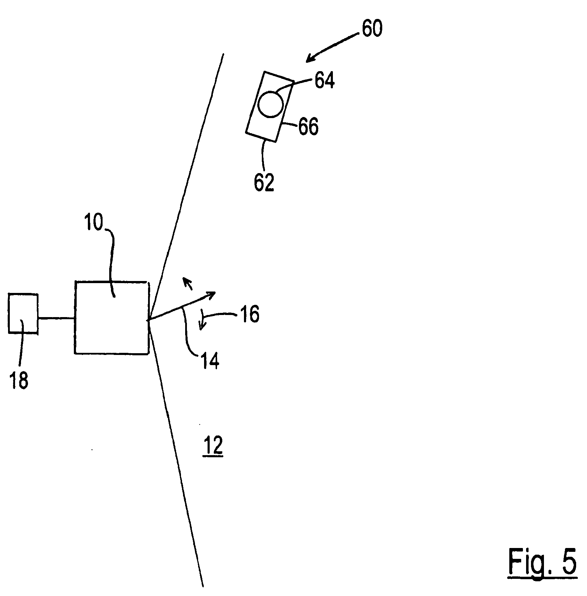

Fig. 5 beschreibt eine Abwandlung einer solchen Ausgestaltung, bei dem das Testobjekt 60 einen Gegenstand 64 umfasst, der in einem Gehäuse 66 angeordnet ist, dessen dem Scanner zugewandte Seite eine Blende 62 umfasst. Hier ist der Gegenstand 64 innerhalb des Gehäuses 66 zusätzlich geschützt, so dass die Verschmutzungswahrscheinlichkeit geringer ist.

Sowohl bei der Ausgestaltung der Fig. 4 als auch bei der Ausgestaltung der Fig. 5 kann die Blende 52, 62 einen LCD-Shutter umfassen. Auf diese Weise ist keine mechanische Änderung der Blendenstellung notwendig, sondern es kann mit Hilfe eines elektrischen Signals die Blende 52, 62 für Licht durchlässig gemacht werden oder abgeschattet werden.

Insbesondere bei der Ausgestaltung der Fig. 5 ergibt sich damit der zusätzliche Vorteil, dass in dem Gehäuse 66 eine verschmutzungsverhindernde Atmosphäre erzeugt werden kann. Die als Frontscheibe wirkende Flüssigkristallblende (LCD-Shutter) kann z.B. auf einfache Weise durch Ultraschall, durch Bewegung oder mit Hilfe eines "Scheibenwischers" gereinigt werden. Außerdem kann eine solche als LCD-Shutter ausgestaltete Frontscheibe so ausgestaltet sein, dass sie nur für die Wellenlänge des Sendelichts des Scannersystems 10 durchlässig ist, so dass sich der Einfluss von Umgebungslicht auf die Qualität der Testung verringert.

Für die erfindungsgemäß eingesetzten Testobjekte sind unterschiedliche Größen verwendbar. Vorteilhaft ist es aber z.B., wenn die Größe Testziels jeweils so groß gewählt wird, dass sie dem Strahldurchmesser des Scannersystems 10 bzw. der geometrischen Auflösung des Sensors entspricht.

Zusätzlich kann die beobachtete Größe des Testziels überwacht werden, ob sie mit der tatsächlichen Größe übereinstimmt, was eine zusätzliche Sicherheit bei der Funktionstestung des Sensors bedeutet.

Bei den in den Figuren dargestellten Ausführungsformen befindet sich das Testobjekt in einem Überwachungsbereich 12, der auch dem Schutzbereich entsprechen kann. Bei anderen Ausgestaltungen befindet sich das Testobjekt jeweils in einem Bereich, der von dem Scannersystem 10 eigentlich nicht auf Präsenz unerlaubter Objekte überwacht wird, aber trotzdem zu seinem Erfassungsbereich gehört, so dass das Testobjekt beobachtet werden kann.

Die geschilderten Ausführungsformen können auch kombiniert werden, wobei entweder mehrere Testobjekte eingesetzt werden, die auf unterschiedliche Art verändert werden, oder ein Testobjekt verschiedenen Veränderungen unterliegen kann, also zum Beispiel verschoben und/oder gedreht und/oder abgeschattet wird etc.

Allen Ausführungsformen der erfindungsgemäßen optischen Sensoreinrichtung ist gemeinsam, dass das Testobjekt zur Durchführung eines erfindungsgemäßen Prüfverfahrens verändert werden kann und dass auf diese Weise das Testobjekt dynamisch beobachtet wird.

### Bezugszeichenliste

- 10: Scannersystem
- 12: Erfassungsbereich
- 14: Scanstrahl
- 16: Scanstrahlbewegung
- 18: Auswerteeinrichtung
- 20: verschiebbares Testobjekt
- 22: Verschiebungsrichtung
- 30: drehbares Testobjekt
- 31a: dunkle Bereiche des Testobjekts
- 31b: helle Bereiche des Testobjekts
- 32: Drehrichtung
- 40: Testobjekt mit Lichtquelle
- 50: Testobjekt mit Blende
- 52: Blende
- 54: Gegenstand
- 60: Testobjekt mit Blende
- 62: Blende
- 64: Gegenstand
- 66: Gehäuse

## Patentansprüche

1. Prüfverfahren zur Prüfung der Funktionsfähigkeit eines optischen Sensors (10) zur Überwachung eines Überwachungsbereichs, wobei
- der Sensor (10) einen Empfänger zur Objektdetektion aufweist,
- bei dem Prüfverfahren wenigstens ein Testobjekt (20, 30, 40, 50, 60) eingesetzt wird, das sich in einem den Überwachungsbereich enthaltenden Erfassungsbereich (12) des Sensors (10) befindet,
- das wenigstens eine Testobjekt (20, 30, 40, 50, 60) während der Durchführung des Prüfverfahrens hinsichtlich seiner optischen Eigenschaften verändert wird,
- das wenigstens eine Testobjekt (20, 30, 40, 50, 60)
(i) nach der Änderung zum Vergleich mit einer vorherigen Beobachtung und/oder
(ii) während der Änderung
mit Hilfe einer Erfassungseinrichtung, vorzugsweise dem Empfänger des Sensors (10), beobachtet wird und
- wenigstens ein Prüfsignal erzeugt wird, wenn die beobachtete Änderung nicht in erwarteter Weise nachgewiesen werden kann, d.h. nicht der während der Durchführung des Prüfverfahrens bewirkten Änderung entspricht,
**dadurch gekennzeichnet, dass**
- das wenigstens eine Testobjekt (50, 60) eine Blende (52, 62), vorzugsweise einen Flüssigkristallshutter, aufweist, die zur Veränderung des Testobjektes (50, 60) geöffnet oder geschlossen wird.

2. Prüfverfahren nach Anspruch 1, **dadurch gekennzeichnet, dass** der Beobachtungsschritt das Detektieren einer optischen Eigenschaft des wenigstens einen Testobjektes (20, 30, 40, 50, 60), vorzugsweise seiner Reflexion oder Remission, umfasst.

3. Prüfverfahren nach einem der Ansprüche 1 oder 2, **dadurch gekennzeichnet, dass** das wenigstens eine Testobjekt (20, 30) innerhalb des Erfassungsbereichs (12) bewegt wird, um das Testobjekt (20, 30) zu verändern.

4. Prüfverfahren nach Anspruch 3, **dadurch gekennzeichnet, dass** das wenigstens eine Testobjekt (20) innerhalb des Erfassungsbereiches (12) verschoben wird, um das Testobjekt (20) zu verändern, und die Positionsveränderung beobachtet wird.

5. Prüfverfahren nach einem der Ansprüche 3 oder 4, **dadurch gekennzeichnet, dass** ein Testobjekt (30) verwendet wird, das nicht von allen Seiten gleich ist, und das Testobjekt (30) gedreht wird um es zu verändern.

6. Prüfverfahren nach Anspruch 5, **dadurch gekennzeichnet, dass** das Testobjekt (30) zumindest über einen gewissen Zeitraum gedreht wird und der Verlauf der Änderung für die Erzeugung des Prüfsignales ausgewertet wird.

7. Prüfverfahren nach einem der Ansprüche 1 bis 6, **dadurch gekennzeichnet, dass** das wenigstens eine Testobjekt (40) eine Lichtquelle aufweist, die ein- oder ausgeschaltet wird, um das Testobjekt (40) zu verändern.

8. Sensoreinrichtung mit einem optischen Sensor (10) zur Überwachung eines Überwachungsbereichs, mit
- einer Erfassungseinrichtung zur Beobachtung eines den Überwachungsbereich umfassenden Erfassungsbereiches (12), und
- wenigstens einem Testobjekt (20, 30, 40, 50, 60) innerhalb des Erfassungsbereiches (12),
**gekennzeichnet durch**
- eine Veränderungseinrichtung zur Veränderung der optischen Eigenschaften des wenigstens einen Testobjektes (20, 30, 40, 50, 60), wobei das wenigstens eine Testobjekt (50, 60) eine Blende (52, 62), vorzugsweise einen Flüssigkristallshutter, aufweist und die Veränderungseinrichtung eine Einrichtung zum Öffnen oder Schließen der Blende (52, 62) aufweist, und
- eine Auswerteeinrichtung (18) zur Auswertung eines Signales der Erfassungseinrichtung und zur Erzeugung eines Prüfsignales, wenn die **durch** die Erfassungseinrichtung beobachtete Änderung des Testobjektes (20, 30, 40, 50, 60) nicht der durch die Veränderungseinrichtung bewirkten Änderung entspricht.

9. Sensoreinrichtung nach Anspruch 8, **dadurch gekennzeichnet, dass** es sich um einen zweidimensionalen oder dreidimensionalen Scanner (10) handelt.

10. Sensoreinrichtung nach Anspruch 8, **dadurch gekennzeichnet, dass** es sich um einen, vorzugsweise nach dem Lichtlaufzeitprinzip arbeitenden, Entfernungsmesser handelt.

11. Sensoreinrichtung nach einem der Ansprüche 8 bis 10, **dadurch gekennzeichnet, dass** die Erfassungseinrichtung eine Kamera umfasst.

12. Sensoreinrichtung nach einem der Ansprüche 8 bis 11, **dadurch gekennzeichnet, dass** die Erfassungseinrichtung derart ausgestaltet ist, dass sie die Reflexion oder die Remission des Testobjektes detektieren kann.

13. Sensoreinrichtung nach einem der Ansprüche 8 bis 12, **dadurch gekennzeichnet, dass** die Veränderungseinrichtung eine Einrichtung zum Bewegen des wenigstens einen Testobjektes (20, 30) umfasst.

14. Sensoreinrichtung nach Anspruch 12, bei dem die Veränderungseinrichtung eine Einrichtung zum Verschieben des wenigstens einen Testobjekts (20) umfasst.

15. Sensoreinrichtung nach einem der Ansprüche 13 oder 14, **dadurch gekennzeichnet, dass** die Veränderungseinrichtung eine Einrichtung zum Drehen des wenigstens einen Testobjektes (30) umfasst, und das Testobjekt (30) nicht von allen Seiten gleich ist.

16. Sensoreinrichtung nach einem der Ansprüche 8 bis 15, **dadurch gekennzeichnet, dass** das wenigstens eine Testobjekt (40) eine Lichtquelle umfasst und die Veränderungseinrichtung eine Einrichtung zum Ein- und Ausschalten Lichtquelle umfasst.

## Claims

1. A test method for testing the operability of an optical sensor (10) for monitoring a monitored zone, wherein
- the sensor (10) has a receiver for object detection,
- at least one test object (20, 30, 40, 50, 60) is used in the test method and is located in a detection zone (12) of the sensor (10) including the monitored zone,
- the at least one test object (20, 30, 40, 50, 60) is changed with respect to its optical properties during the carrying out of the test method;
- the at least one test object (20, 30, 40, 50, 60) is observed
(i) after the change for comparing with a previous observation and/or
(ii) during the change
with the aid of a detection device, preferably the receiver of the sensor (10); and
- at least one test signal is produced when the observed change cannot be detected in an expected manner, i.e. does not correspond to the change effected during the carrying out of the test method,
**characterized in that**
the at least one test object (50, 60) has a diaphragm (52, 62), preferably a liquid crystal shutter, which is opened or closed for changing the test object (50, 60).

2. A test method in accordance with claim 1, **characterized in that** the observation step includes the detection of an optical property of the at least one test object (20, 30, 40, 50, 60), preferably its reflection or remission.

3. A test method in accordance with claim 1 or claim 2, **characterized in that** the at least one test object (20, 30) is moved within the detection zone (12) to change the test object (20, 30).

4. A test method in accordance with claim 3, **characterized in that** the at least one test object (20) is displaced within the detection zone (12) to change the test object (20) and the positional change is observed.

5. A test method in accordance with claim 3 or claim 4, **characterized in that** a test object (30) is used which is not the same from all sides and the test object (30) is rotated to change it.

6. A test method in accordance with claim 5, **characterized in that** the test object (30) is rotated at least over a specific time period and the extent of the change is evaluated for the production of the test signal.

7. A test method in accordance with any one of the claims 1 to 6, **characterized in that** the at least one test object (40) has a light source which is switched on or off to change the test object (40).

8. A sensor device having an optical sensor (10) for monitoring a monitored zone, having
- a detection device for observing a detection zone (12) including the monitored zone; and
- at least one test object (20, 30, 40, 50, 60) within the detection zone (12),
**characterized by**
- a change device for changing the optical properties of the at least one test object (20, 30, 40, 50, 60), with the at least one test object (50, 60) having a diaphragm (52, 62), preferably a liquid crystal shutter, and with the change device having a device for opening or closing the diaphragm (52, 62); and
- an evaluation device (18) for evaluating a signal of the detection device and for producing a test signal if the change of the test object (20, 30, 40, 50, 60) observed by the detection device does not correspond to the change effected by the change device.

9. A sensor device in accordance with claim 8, **characterized in that** it is a two-dimensional or three-dimensional scanner (10).

10. A sensor device in accordance with claim 8, **characterized in that** it is a distance measurement system which preferably works in accordance with the principle of the time of flight.

11. A sensor device in accordance with any one of the claims 8 to 10, **characterized in that** the detection device includes a camera.

12. A sensor device in accordance with any one of the claims 8 to 11, **characterized in that** the detection device is configured such that it can detect the reflection or the remission of the test object.

13. A sensor device in accordance with any one of the claims 8 to 12, **characterized in that** the change device includes a device for moving the at least one test object (20, 30).

14. A sensor device in accordance with claim 12, in which the change device includes a device for displacing the at least one test object (20).

15. A sensor device in accordance with one of the claims 13 or 14, **characterized in that** the change device includes a device for rotating the at least one test object (30) and the test object (30) is not the same from all sides.

16. A sensor device in accordance with any one of the claims 8 to 15, **characterized in that** the at least one test object (40) includes a light source and the change device includes a device for switching the light source on and off.

## Revendications

1. Procédé de contrôle pour contrôler la capacité fonctionnelle d'un capteur optique (10) destiné à la surveillance d'une zone de surveillance, dans lequel
- le capteur (10) comprend un récepteur pour la détection d'objets,
- dans le procédé de contrôle on emploie au moins un objet test (20, 30, 40, 50, 60), qui se trouve dans une zone de détection (12) du capteur (10) qui contient la zone de surveillance,
- ledit au moins un objet test (20, 30, 40, 50, 60) est modifié quant à ses propriétés optiques pendant l'exécution du procédé de contrôle,
- ledit au moins un objet test (20, 30, 40, 50, 60) est observé
(i) après la modification pour la comparaison avec une observation antérieure et/ou
(ii) pendant la modification
avec l'aide d'un dispositif de détection, de préférence le récepteur du capteur (10), et
- au moins un signal de contrôle est engendré quand la modification observée ne peut pas être mise en évidence de la manière attendue, c'est-à-dire qu'elle ne correspond pas à la modification effectuée pendant la mise en oeuvre du procédé de contrôle,
**caractérisé en ce que** ledit au moins un objet test (50, 60) comprend un diaphragme (52, 62), de préférence un obturateur à cristaux liquides, qui est ouvert ou fermé pour modifier l'objet test (50, 60).

2. Procédé de contrôle selon la revendication 1, **caractérisé en ce que** l'étape d'observation inclut la détection d'une propriété optique dudit au moins un objet test (20, 30, 40, 50, 60), de préférence sa réflexion ou sa réémission.

3. Procédé de contrôle selon l'une des revendications 1 ou 2, **caractérisé en ce que** ledit au moins un objet test (20, 30) est déplacé à l'intérieur de la zone de détection (12) afin de modifier l'objet test (20, 30).

4. Procédé de contrôle selon la revendication 3, **caractérisé en ce que** ledit au moins un objet test (20) est déplacé en translation à l'intérieur de la zone de détection (12) afin de modifier l'objet test (20), et la modification de position est observée.

5. Procédé de contrôle selon l'une des revendications 3 ou 4, **caractérisé en ce que** l'on utilise un objet test (30) qui n'est pas égal depuis tous les côtés, et l'objet test (30) est tourné afin de le modifier.

6. Procédé de contrôle selon la revendication 5, **caractérisé en ce que** l'objet test (30) est tourné au moins pendant une certaine durée, et l'évolution de la modification est évaluée pour engendrer le signal de contrôle.

7. Procédé de contrôle selon l'une des revendications 1 à 6, **caractérisé en ce que** ledit au moins un objet test (40) comprend une source de lumière qui est mise en marche ou arrêtée afin de modifier l'objet test (40).

8. Système capteur comprenant un capteur optique (10) pour la surveillance d'une zone de surveillance, comprenant
- un dispositif de détection pour l'observation d'une zone de détection (12) incluant la zone de surveillance, et
- au moins un objet test (20, 30, 40, 50, 60) à l'intérieur de la zone de détection (12),
**caractérisé par**
- un dispositif de modification pour modifier les propriétés optiques dudit au moins un objet test (20, 30, 40, 50, 60), tel que ledit au moins un objet test (50, 60) comprend un diaphragme (52, 62), de préférence un obturateur à cristaux liquides, et le dispositif de modification comprend un moyen pour ouvrir et fermer le diaphragme (52, 62), et
- un dispositif d'évaluation (18) pour évaluer un signal du dispositif de détection et pour engendrer un signal de contrôle quand la modification de l'objet test (20, 30, 40, 50, 60) observé par le dispositif de détection ne correspond pas à la modification provoquée par le dispositif de modification.

9. Système capteur selon la revendication 6, **caractérisé en ce qu'**il s'agit d'un scanner à deux dimensions ou à trois dimensions (10).

10. Système capteur selon la revendication 8, **caractérisé en ce qu'**il s'agit d'un appareil de mesure de distance, fonctionnant de préférence d'après le principe du temps de parcours de la lumière.

11. Système capteur selon l'une des revendications 8 à 10, **caractérisé en ce que** le dispositif de détection inclut une caméra.

12. Système capteur selon l'une des revendications 8 à 11, **caractérisé en ce que** le dispositif de détection est conçu de telle manière qu'il est capable de détecter la réflexion ou la réémission de l'objet test.

13. Système capteur selon l'une des revendications 8 à 12, **caractérisé en ce que** le dispositif de modification inclut un moyen pour déplacer ledit au moins un objet test (20, 30).

14. Système capteur selon la revendication 12, dans lequel le dispositif de modification inclut un moyen pour déplacer en translation ledit au moins un objet test (20).

15. Système capteur selon l'une des revendications 13 ou 14, **caractérisé en ce que** le dispositif de modification inclut un moyen pour tourner ledit au moins un objet test (30), et l'objet test (30) n'est pas égal de tous les côtés.

16. Système capteur selon l'une des revendications 8 à 15, **caractérisé en ce que** ledit au moins un objet test (40) inclut une source de lumière, et le dispositif de modification inclut un moyen pour mettre en marche et arrêter la source de lumière.
